# EUROPEAN PATENT APPLICATION

(11) **EP 4 151 125 A1**
(43) Date of publication of application: **22.03.2023**
(21) Application number: 21197644.4
(22) Date of filing: 20.09.2021
(51) Int. Cl.: A47B 77/08

(54) **CABINET WITH A HIDDEN HOLDER FOR AN ELECTRONIC DEVICE**

(71) Applicant: BSH Hausgeräte GmbH, 81739 München (DE)
(72) Inventor: Sagoo, Kiran Pal, 82256 Fürstenfeldbruck (DE)

(57) **Abstract**

A cabinet (100) configured to be attached to and/or to be placed against a wall of a room, notably a kitchen, is described. The cabinet (100) comprises a front panel (109) comprising a front side facing a user of the cabinet (100) and a back side facing an interior of the cabinet (100). Furthermore, the cabinet (100) comprises a holder (130) at the back side of the front panel (109), which is configured to hold a handheld electronic device (140) such that a display of the electronic device (140) is facing the back side of the front panel (109). The front panel (109) is configured such that visual content (203) which is shown on the display of the electronic device (140) is visible by the user facing the front side of the front panel (109).

## Description

The present document relates to a cabinet, in particular a kitchen cabinet, with a hidden holder for an electronic device.

An electronic device, such as a tablet PC or a smartphone, may be used within a household, notably within a kitchen, to provide support for a household task, such as cooking. By way of example, the user may use the electronic device to search for a recipe and to render, e.g., to display, cooking instructions from the recipe. During a cooking process it may be difficult for the user to interact with the electronic device, as the user may have wet hands.

The present document addresses the technical problem of increasing the comfort of use of an electronic device within a household, in particular within a kitchen. The technical problem is solved by the independent claim. Preferred examples are described in the dependent claims.

According to an aspect, a cabinet which may be configured to be attached to and/or to be placed against a wall of a room, in particular a kitchen, is described. The cabinet may be a kitchen cabinet, notably a hanging kitchen cabinet and/or a kitchen cabinet of a fitted kitchen. The cabinet may have the form of a cuboid. The cabinet may comprise side walls which may form a rectangular frame. The side walls of the cabinet may extend away from the wall that the cabinet is attached to and/or placed against. In particular, the side walls of the cabinet may be perpendicular to the wall that the cabinet is attached to and/or placed against. Furthermore, the cabinet may comprise a front panel which may cover the rectangular frame formed by the side walls of the cabinet. The front panel may be parallel to the wall that the cabinet is attached to and/or placed against. The cabinet may have a width of 20cm or more, a height of 20cm or more and/or a depth of 20cm or more. The side walls and/or the front panel of the cabinet may comprise wood. In particular the side walls and/or the front panel may be formed using fibreboard, notably medium-density fibreboard (MDF), and/or (plain) wood.

The cabinet comprises a holder (also referred to herein as a support) for holding a handheld electronic device (such as a tablet PC or a smartphone), which typically comprises a display. The holder, in particular a gap or a slot of the holder, may be dimensioned for (differently sized) electronic devices having a display size for 5 inches or more and/or of 15 inches or less. Furthermore, the holder, in particular the gap or the slot of the holder, may be dimensioned for electronic devices having a width (perpendicular to the display) of 2mm or more and/or 15mm or less.

As already indicated above, the cabinet typically comprises a front panel, which is intended to face a user of the cabinet. The front panel may be turned away from the wall that the cabinet is attached to and/or placed against. Furthermore, the front panel may delimit the interior of the cabinet (which may e.g., be used for storing food items, cooking equipment or dishes). Furthermore, the cabinet may comprise a side wall which extends away from the wall that the cabinet is attached to and/or placed against. In particular, the cabinet may comprise a lower side wall and an upper side wall which are arranged parallel to the ground that the cabinet is standing on or is aligned to. Furthermore, the cabinet may comprise perpendicular side walls which are arranged perpendicular to the ground that the cabinet is standing on or is aligned to. The front panel may be designed to be a door that can be opened to give access to the interior of the cabinet.

Hence, the cabinet comprises a front panel with a front side facing a user of the cabinet and a back side facing the interior of the cabinet. Furthermore, the cabinet comprises a holder at the back side of the front panel, which is configured to hold a handheld electronic device such that the display of the electronic device is facing the back side of the front panel.

The holder may comprise a rear panel which is arranged in parallel to the back side of the front panel, in particular to the back side of a display section of the front panel, to form a gap (or a slot) between the front panel (in particular the display section of the front panel) and the rear panel, wherein the gap (or slot) is designed for taking up the electronic device. Hence, the holder may comprise a gap (or slot) which runs in parallel to the back side of the front panel. The gap (or slot) may be such that the electronic device can be inserted into the gap in order to be held by the holder. For this purpose, the gap may comprise an opening on one side or on the top of the holder, into which the electronic device may be inserted.

As such, a cabinet is described, which comprises a holder at the back side of the front panel of the cabinet. This allows a handheld electronic device to be hidden behind the front panel. Furthermore, this allows the electronic device to be stored in a space efficient manner.

The holder is designed such that the electronic device may be placed into the holder with the display of the electronic device facing the back side of the front panel. Furthermore, the front panel is preferably configured and/or designed such that visual content, which is shown on the display of the electronic device, is visible to a user facing the front side of the front panel. For this purpose, the front panel may be at least partially transparent at the position at which the holder is located. This can be accomplished, for example, by a tinted glass or ceramics, which may be similar to the black glass-like ceramics, which are used for many cooktops today.

The holder for the electronic device may be located at a position at the back side of the front panel, which may be referred to as "holder position". The front panel may comprise a display section at the holder position. Hence, an electronic device which is placed within the holder may be located between the display section of the front panel and the rear panel of the holder. In particular, the display of the electronic device may be located at the back side of the display section of the front panel. The display section of the front panel may be at least partially transparent for visual content, which is shown on the display of the electronic device.

Hence, a cabinet is described which comprises a holder for an electronic device, which is located behind an at least partially transparent front panel of the cabinet, thereby allowing a user of the cabinet and/or of the electronic device to interact with the electronic device in a particularly comfortable manner. The holder of the cabinet is preferably designed such that a user may place an electronic device into and/or withdraw from the holder without making use of any tools.

The display section of the front panel may be configured to occlude the display of the electronic device, when the display of the electronic device is turned off. Alternatively, or in addition, the front side of the display section of the front panel may have the same color and/or optical design as the remaining area of the front side of the front panel. Alternatively, of in addition, the display section may be such that the display section blends into the remaining area of the front panel, when the display of the electronic device is turned off.

Hence, the front panel may have a homogenous appearance, when the display of the electronic device is turned off, thereby preventing a user from being distracted by the electronic device.

As indicated above, the front panel of the cabinet may be a door of the cabinet that can be opened to give access to the holder at the back side of the front panel. As a result of this, a user may place an electronic device into the holder or withdraw the electronic device from the holder in a comfortable manner.

The cabinet may comprise a presence and/or proximity sensor which is configured to detect the presence of a user in front of the (front side of the) front panel of the cabinet. A control unit of the cabinet may be configured to cause the display of the electronic device to be activated, subject to detecting the presence of the user in front of the front panel of the cabinet. In particular, the control unit may be configured to cause one or more user-specific messages to be shown on the display of the electronic device, subject to detecting the presence of the user in front of the front panel of the cabinet. On the other hand, the control unit may be configured to cause the display of the electronic device to be turned off, subject to detecting the absence of a user in front of the front panel of the cabinet. As a result of this, the comfort of user interaction with the electronic device may be improved further.

The cabinet may comprise one or more input elements (notably a control button, a gesture sensor and/or one or more microphones) configured to capture input data regarding a user input for the electronic device, which is placed within the holder of the cabinet. The one or more input elements may be positioned at the front panel of the cabinet, for enabling a comfortable user input.

In addition, the cabinet may comprise a control unit (e.g., a microprocessor) which is configured to cause the electronic device to be controlled in dependence of the input data captured by the one or more input elements of the cabinet. The control may be performed via a (wireline or wireless) communication link between the cabinet and the electronic device, which is placed within the holder of the cabinet.

Hence, a (kitchen) cabinet is described which may comprise a build-in docking station for an electronic device, thereby allowing a comfortable and safe interaction of a user with the electronic device (e.g., when cooking). In particular, the one or more input elements of the cabinet may be used to (fully) control the electronic device (without the need for a direct user input at the electronic device).

The control unit may be configured to detect that an electronic device has been placed within the holder of the cabinet. This may be detected using one or more sensors of the cabinet. Furthermore, the control unit may be configured, in reaction to this, to automatically establish the (wireline or wireless) communication link with the electronic device. Hence, an automatic docking process may be performed when an electronic device is placed within the holder of the cabinet, thereby increasing the comfort for a user of the cabinet.

The communication link between the electronic device and the control unit of the cabinet may be used for exchanging data. In particular, the control unit may be enabled to control the electronic device via the communication link. Alternatively, or in addition, the communication link may be used to provide data (e.g., audio data) from the electronic device to the control unit.

The cabinet may comprise a gesture sensor (as an input element), notably at the front panel of the cabinet, which is configured to sense gesture data regarding a gesture performed by a user (in front of the front panel of the cabinet). The control unit may be configured to cause the electronic device, which is placed within the holder to be controlled based on the gesture data (via the communication link). Hence, the user may be enabled to interact with the electronic device (notably with visual content shown on the display of the electronic device) using gestures, thereby increasing the comfort of use for the user.

Alternatively, or in addition, the cabinet may comprise one or more microphones (as input elements), notably at the front panel of the cabinet, configured to capture acoustic data regarding a voice control command of a user of the cabinet. The control unit may be configured to cause the electronic device which is placed within the holder of the cabinet to be controlled based on the acoustic data (via the communication link), thereby allowing the user to interact with the electronic device in a particularly comfortable manner.

Hence, the cabinet may be configured to allow for a gesture and/or voice control of an electronic device (even for electronic devices which are not enabled for gesture and/or voice control). For this purpose, the control unit may be configured to convert the gesture data and/or the audio data into one or more control commands for controlling the electronic device. In particular, the control unit of the cabinet may be configured to map different gestures and/or different voice commands to different control commands for controlling the electronic device (e.g., using a mapping table).

The cabinet may comprise one or more speakers, notably at the front panel of the cabinet. The control unit may be configured to receive an audio signal from the electronic device placed within the holder of the cabinet (via the communication link). Furthermore, the control unit may be configured to cause the audio signal to be rendered by the one or more speakers. Hence, the cabinet may be configured to provide the acoustic output of the electronic device, thereby further improving the user interaction with the electronic device.

The cabinet, notably the holder, may comprise a charging element, notably a charging coil, configured to charge the electronic device which is placed within the holder of the cabinet. The charging element may be configured to perform wireless charging of the electronic device, thereby increasing the comfort of use of the cabinet.

The cabinet typically comprises a power supply which is configured to supply the different components of the cabinet (notably the one or more speakers, the control unit, the gesture sensor, the charging element, etc.) with electrical energy.

Very often producers of furniture and producers of consumer electronics are different companies. Therefore, according to a further aspect, the described cabinet may be conceptually divided into a first component (often mainly consisting out of wood), which may be referred to as a conventional cabinet, and an integration component, which may comprise especially some or all of the above-mentioned electronic components. Thus, according to a further aspect, the invention comprises an integration component, which is adapted to be integrated into a conventional cabinet, preferably a kitchen cabinet, notably a kitchen cabinet of a fitted kitchen, such that upon integration of the integration component into the conventional cabinet a cabinet as described above results. The integration component may be attached to the wood of the conventional cabinet, for example, by using glue or screws.

Such an integration component comprises at least a front panel comprising a front side, which is intended to face a user of the cabinet, and a back side, which is intended to face an interior of the cabinet; and a holder at the back side of the front panel, which is configured to hold a handheld electronic device such that a display of the electronic device is facing the back side of the front panel; wherein the front panel is configured such that visual content which is shown on the display of the electronic device is visible to the user facing the front side of the front panel.

It should be noted that the cabinets and integration components including their preferred embodiments as outlined in the present document may be used stand-alone or in combination with the other cabinets and integration components disclosed in this document. In addition, the features outlined in the context of a cabinet are also applicable to a corresponding integration component. Furthermore, all aspects of the cabinets and integration components outlined in the present document may be arbitrarily combined. In particular, the features of the claims may be combined with one another in an arbitrary manner.

The invention is explained below in an exemplary manner with reference to the accompanying drawings, wherein
- Figures: 1a to 1g show a cabinet with a build-in docking station and a hidden holder for an electronic device; and
- Figures: 2a to 2c show further details regarding the cabinet with the build-in docking station.

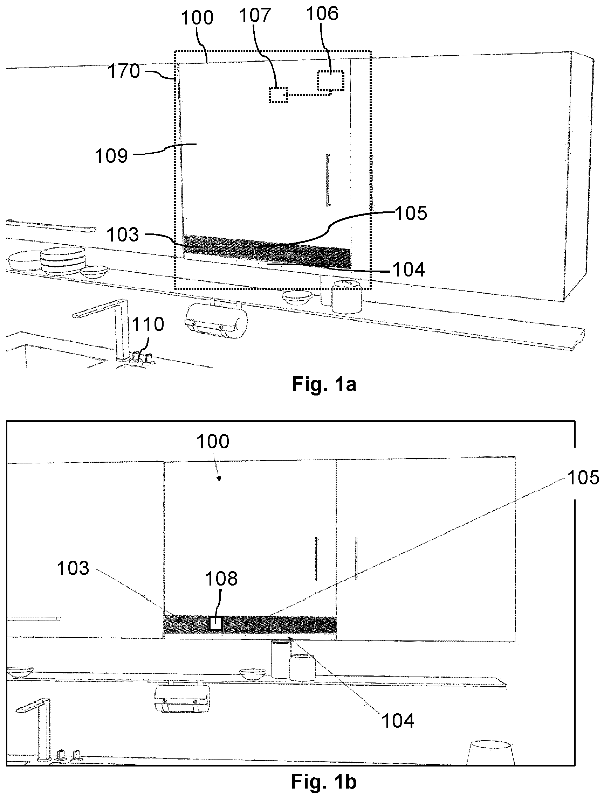

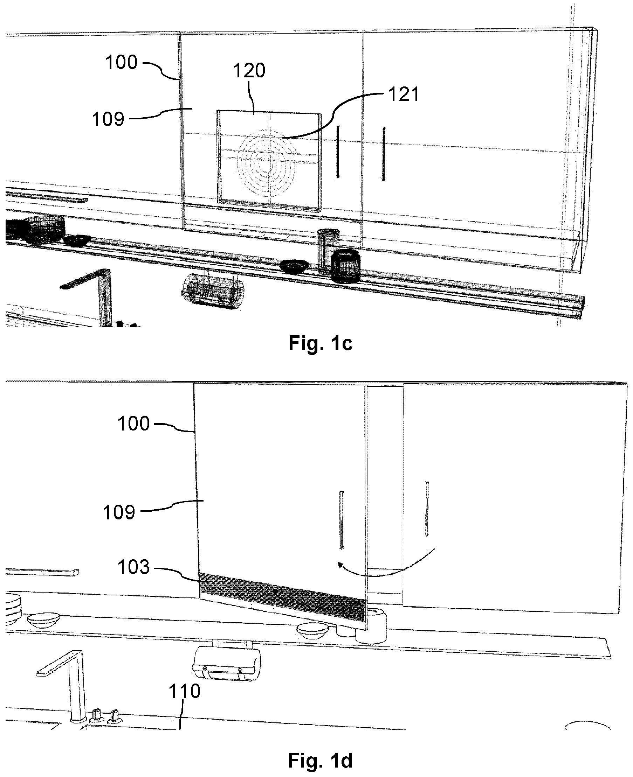

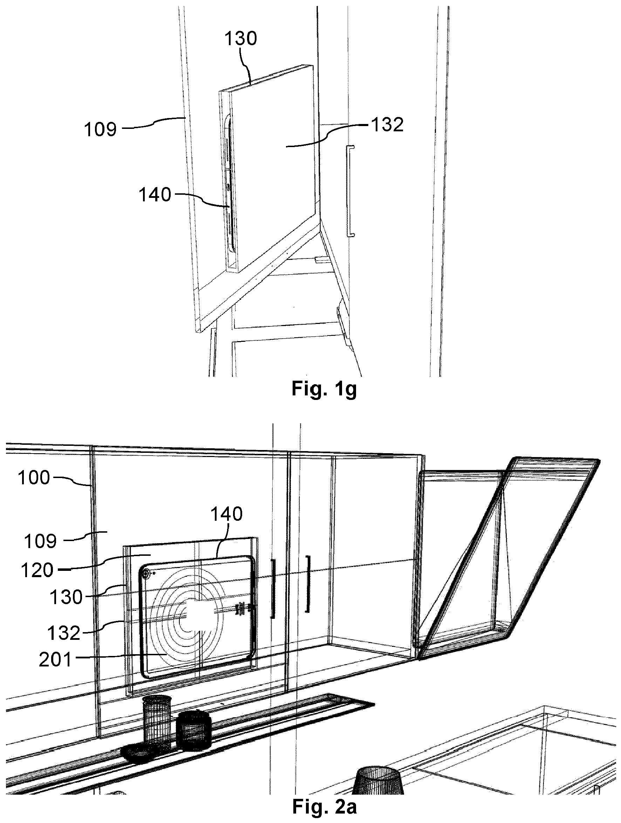

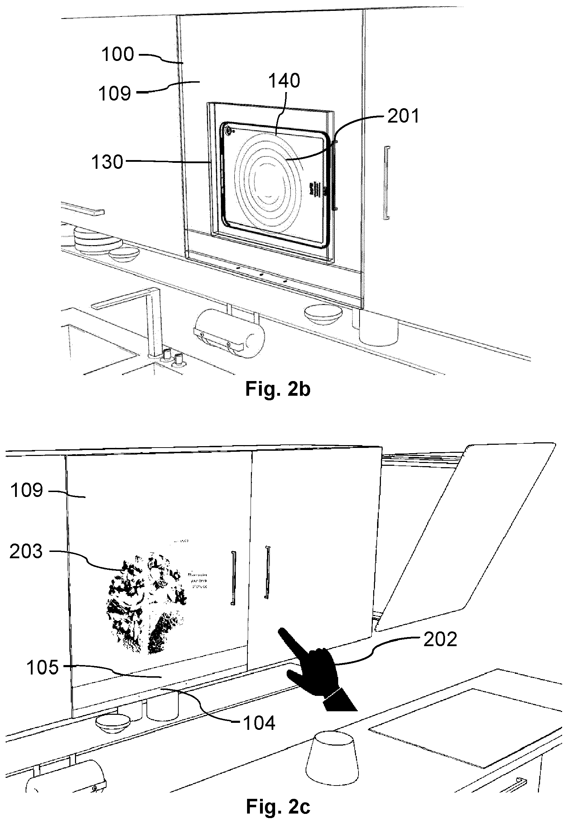

As outlined above, the present document is directed at increasing the comfort of use of a (handheld) electronic device, such as a tablet PC or a smartphone, within a household, in particular within a kitchen. In this context, Figures 1a to 1g and Figures 2a to 2c illustrate a cabinet 100, in particular a kitchen cabinet, which comprises a build-in docking station 170 for an electronic device 140. The cabinet 100 may be configured to be attached to a wall above a kitchen worktop 110. The docking station 170 is configured to provide a user interface for an electronic device 140 which is placed within the docking station 170, in particular within a holder 130 of the docking station 170.

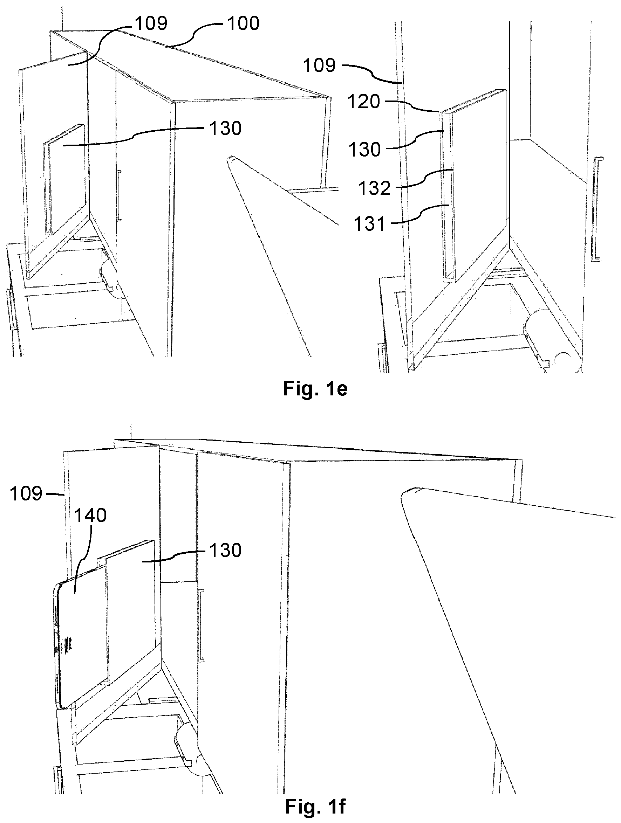

As shown in Figs. 1e and 1f, the cabinet 100 comprises a holder 130 (also referred to as a mounting or a support), into which the electronic device 140 may be placed. The cabinet 100, in particular the docking station 170, may comprise a (wireline and/or wireless) communication interface 107 for interacting and/or communicating with the electronic device 140 that is placed into the holder 130 of the cabinet 100. The communication interface 107 may, e.g., comprise a USB interface. Alternatively, or in addition, the communication interface 107 may comprise a Bluetooth or a WLAN interface. The docking station 170, in particular the control unit 106, may be configured to exchange data with the electronic device 140 via a communication link provided by the communication interface 107.

Furthermore, the cabinet 100, in particular the build-in docking station 170, may comprise one or more control or input elements which enable a user to control the electronic device 140. In particular, the cabinet 100 may comprise a gesture sensor 105 configured to sense gesture data regarding a gesture, e.g., a hand gesture, which is performed by a user in front of the cabinet 100. Alternatively, or in addition, the cabinet 100 may comprise one or more microphones 104, e.g., a microphone array, configured to sense acoustic data regarding a voice control command of the user of the electronic device 140. The gesture sensor 105 and/or the one or more microphones 104 may be located at the front panel 109 of the cabinet 100, which is facing the user of the cabinet 100.

The control unit 106 of the cabinet 100, in particular of the build-in docking station 170, may be configured to process the gesture data and/or the acoustic data, in order to enable gesture control and/or voice control of the electronic device 140 based on the gesture data and/or the acoustic data. By way of example, the control unit 106 may be configured to send the gesture data and/or the acoustic data (or processed versions of the gesture data and/or the acoustic data) to the electronic device 105 via the communication link provided by the communication interface 107.

In addition, the cabinet 100, in particular the build-in docking station 170, may comprise one or more speakers 103, notably loudspeakers, which are configured to render an audio signal that is provided by the electronic device 140. The audio signal may be provided to the control unit 106 via the communication interface 107. Furthermore, the control unit 106 may control rendering of the audio signal using the one or more speakers 103. The speakers 103 may be located at the front panel 109 of the cabinet 100, which is facing the user of the cabinet 100.

Fig. 1a shows a perspective view of the cabinet 100 which is placed above a kitchen worktop 110. Fig. 1b shows a front view of the cabinet 100. The holder 130 for the electronic device 140 is positioned behind the front panel 109 of the cabinet 100. As illustrated in Fig. 1e, the holder 130 may form a gap or slot 131 between the front panel 109 and a rear panel 132 of the holder 130, into which the electronic device 140 may be placed. In particular, the holder 130 may be designed such that the electronic device 140 may be inserted into the gap 131 from the side or from the top of the holder 130.

The front panel 109 of the cabinet 100 may have a display section 120 at the position of the holder 120. As indicated above, the holder 120 may be located at the backside of the front panel 109 (which is facing the interior of the cabinet 100). In particular, the holder 130 may be attached to the back side of the front panel 109 of the cabinet 100 at a particular holder position. The front panel 109 may have a display section 120 at the holder position, such that the gap 131 of the holder 130 is located between the display section 120 of the front panel 109 and the rear panel 132 of the holder 130.

An electronic device 140 may be placed within the gap 131 of the holder 130 with the display of the electronic device 140 facing the display section 120 of the front panel 109.

The display section 120 may be configured to be at least partially transparent for the visual content 203 shown on the display of the electronic device 140. This enables a user to view the visual content 203 which is shown on the display of the electronic device 140 through the display section 120 of the front panel 109 of the cabinet 100 (without the need of opening the front panel 109 and/or of removing the electronic device 140 from the holder 130).

The display section 120 of the front panel 109 may be configured such that the display of the electronic device 140 and/or the rear panel 132 of the holder 130 is not visible, when the display of the electronic device 140 is turned off and/or when no electronic device 140 is placed within the holder 130. In a preferred example, the display section 120 blends into the remaining area of the front panel 109, when the display of the electronic device 140 is turned off and/or when no electronic device 140 is placed within the holder 130. In particular, the display section 120 may have the same color and/or the same optical design as the remaining area of the front panel 109, at least when the display of the electronic device 140 is turned off and/or when no electronic device 140 is placed within the holder 130.

The cabinet 100 may comprise a charging element 201, e.g., a charging coil, which is configured to charge the electronic device 140 which is placed within the holder 130. The charging element 201, in particular the charging coil, may be integrated within the rear panel 132 of the holder 130.

As illustrated in Fig. 2c, the user may interact with the electronic device 140 using the one or more input elements 104, 105 and/or the one or more output elements 103 provided by the build-in docking station 170 of the cabinet 100. In particular, the gesture sensor 105 of the cabinet 100 may be used to capture one or more hand gestures of a hand 202 of the user. The control unit 106 may be configured to control the electronic device 140 based on the one or more hand gestures captured by the gesture sensor 105 of the cabinet 100. In a similar manner, voice control may be enabled using one or more voice control commands captured by the one or more microphones 104 of the cabinet 100. On the other hand, audio output of the electronic device 140 may be provided via the one or more loudspeakers 103 of the cabinet 100.

As illustrated in Fig. 1b, the cabinet 100, in particular, the build-in docking station 170, may comprise a proximity and/or presence sensor 108 which is configured to detect the presence and/or the absence of a user in front of the cabinet 100. The control unit 106 may be configured to cause the display of the electronic device 140 to be turned on automatically, in reaction to detecting the presence of a user in front of the cabinet 100. Furthermore, the control unit 106 may cause one or more messages to be shown on the display of the electronic device 140. As a result of this, the user interaction with the electronic device 140 may be initiated automatically, when a user is detected in front of the cabinet 100, thereby further improving the comfort for the user.

Hence, the integration of consumer electronics into the kitchen interior is described. In particular, a kitchen cabinet 100 with a built-in docking station 170 is described. The cabinet 100 may comprise an integrated speaker 103, a gesture sensor 105 and/or a microphone array 104. The user may interface with the electronic device 140, notably with the displayed information on the electronic device 140, through voice and/or gesture. The user may place an electronic device 140 such as a tablet PC or any smart device in the holder (also referred to as support) 130 of the cabinet 100.

The kitchen cabinet 100 may comprise a hidden holder 130 for an electronic device 140. The electronic device 140 may be placed within the holder 130 with the display of the electronic device 140 facing the backside of the front panel 109 of the cabinet 100. This allows the provision of a hidden display on demand (DOD) within the cabinet 100. The holder 130 may be located behind the (e.g., thin wooden) panel 109 of the cabinet door. The front panel 109 (e.g., the cabinet door) may also comprise an integrated speaker 103, a microphone array 104, a gesture sensor 105 and/or a proximity sensor 108.

When not in use (i.e., when turned off) the display is preferably hidden to maintain the aesthetic harmony of the kitchen. A user may be enabled to activate the hidden display through a voice command using built-in voice interaction.

The hidden cabinet holder 130 allows a user to place an electronic device 140 into the holder 130 and to thereby convert the cabinet 100 into an interactive device. The hidden cabinet holder 130 allows the electronic device 140 to be placed in a space efficient manner, with no space being taken up on the worktop area 110 of the kitchen and/or on the front of the kitchen cabinet 100.

When the electronic device 140 is placed inside the holder 130, the user may interact with the device 140 is various different ways. The user may place a voice command through the microphone array 104 and/or the user may interact with the content through gestures. The proximity sensor 108 of the cabinet 100 may be configured to sense the presence of a user. In reaction to this, the display of the electronic device 140 may be activated automatically, e.g., to display one or more messages, wherein the one or more messages may be dependent on a current context.

The cabinet 100 described in the present document enables a user to interact with an electronic device 140 in a comfortable and reliable manner, notably when cooking. Furthermore, the cabinet 100 allows the electronic device 140 to be stored in a protected position with regards to dirt and/or fluid. By providing a proximity and/or presence sensor 108, a proactive user interaction may be enabled. The hidden display may be used for providing context-specific and/or personal messages.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. A cabinet (100), especially a kitchen cabinet, notably a kitchen cabinet of a fitted kitchen, configured to be attached to and/or to be placed against a wall of a room; wherein the cabinet (100) comprises
- a front panel (109) comprising a front side facing a user of the cabinet (100) and a back side facing an interior of the cabinet (100); and
- a holder (130) at the back side of the front panel (109), which is configured to hold a handheld electronic device (140) such that a display of the electronic device (140) is facing the back side of the front panel (109); wherein the front panel (109) is configured such that visual content (203) which is shown on the display of the electronic device (140) is visible to the user facing the front side of the front panel (109).

2. The cabinet (100) of claim 1, wherein
- the holder (130) for the electronic device (140) is located at a holder position at the back side of the front panel (109);
- the front panel (109) comprises a display section (120) at the holder position;
- the display of the electronic device (140) is located at a back side of the display section (120) of the front panel (109); and
- the display section (120) of the front panel (109) is at least partially transparent for visual content (203) which is shown on the display of the electronic device (140).

3. The cabinet (100) of claim 2, wherein
- the display section (120) of the front panel (109) is configured to occlude the display of the electronic device (140), when the display of the electronic device (140) is turned off; and/or
- the front side of the display section (120) of the front panel (109) has the same color and/or optical design as the remaining area of the front side of the front panel (109); and/or
- the display section (120) is such that the display section (120) blends into the remaining area of the front panel (109), when the display of the electronic device (140) is turned off.

4. The cabinet (100) of any previous claims, wherein the holder (130) comprises a rear panel (132) which is arranged in parallel to the back side of the front panel (109), in particular to the back side of a display section (120) of the front panel (109), to form a gap (131) between the front panel (109) and the rear panel (132) for taking up the electronic device (140).

5. The cabinet (100) of any previous claims, wherein
― the holder (130) comprises a gap (131) which extends in parallel to the back side of the front panel (109); and
― the gap (131) is such that the electronic device (140) can be inserted into the gap (131) to be held by the holder (130).

6. The cabinet (100) of any previous claims, wherein the front panel (109) of the cabinet (100) is a door of the cabinet (100) that can be opened to give access to the holder (130) at the back side of the front panel (109).

7. The cabinet (100) of any previous claims, wherein the cabinet (100) comprises
― a presence and/or proximity sensor (108) which is configured to detect the presence of the user in front of the front panel (109) of the cabinet (100); and
― a control unit (106) which is configured to
― cause the display of the electronic device (140) to be activated, subject to detecting the presence of the user in front of the front panel (109) of the cabinet (100); and/or
― cause one or more user-specific messages to be shown on the display of the electronic device (140), subject to detecting the presence of the user in front of the front panel (109) of the cabinet (100).

8. The cabinet (100) of claim 7, wherein the control unit (106) is configured to cause the display of the electronic device (140) to be turned off, subject to detecting the absence of a user in front of the front panel (109) of the cabinet (100).

9. The cabinet (100) of any previous claims, wherein the cabinet (100) comprises
― one or more input elements (104, 105) configured to capture input data regarding a user input for the electronic device (140) placed within the holder (130); and
― a control unit (106) configured to cause the electronic device (140) to be controlled in dependence of the input data.

10. The cabinet (100) of claim 9, wherein the control unit (106) is configured to
― detect that an electronic device (140) has been placed within the holder (130) of the cabinet (100); and
― in reaction to this automatically establish a communication link with the electronic device (140) for allowing the electronic device (140) to be controlled based on the input data from the one or more input elements (104, 105) of the cabinet (100).

11. The cabinet (100) of any of claims 9 to 10, wherein
― the cabinet (100) comprises a gesture sensor (105) as an input element (104, 105), notably at the front panel (109) of the cabinet (100), configured to sense gesture data regarding a gesture performed by the user of the cabinet (100) as input data; and
― the control unit (106) is configured to cause the electronic device (140) to be controlled based on the gesture data.

12. The cabinet (100) of any of claims 9 to 11, wherein
― the cabinet (100) comprises one or more microphones (104) as an input element (104, 105), notably at the front panel (109) of the cabinet (100), configured to capture acoustic data regarding a voice control command of the user of the cabinet (100) as input data; and
― the control unit (106) is configured to cause the electronic device (140) to be controlled based on the acoustic data.

13. The cabinet (100) of any previous claims, wherein the cabinet (100) comprises
― one or more speakers (103), notably at the front panel (109) of the cabinet (100); and
― a control unit (106) which is configured to
― receive an audio signal from the electronic device (105) placed within the holder (130) of the cabinet (100); and
― cause the audio signal to be rendered by the one or more speakers (103).

14. The cabinet (100) of any previous claims, wherein the cabinet (100), notably the holder (130), comprises a charging element (121), notably a charging coil, configured to charge the electronic device (140) which is placed within the holder (130) of the cabinet (100).

15. An integration component, which is adapted to be integrated into a conventional cabinet, preferably a kitchen cabinet, notably a kitchen cabinet of a fitted kitchen, such that upon integration of the integration component into the cabinet a cabinet according to any of the previous claims results, wherein the integration component comprises at least
- a front panel (109) comprising a front side, which is intended to face a user of the cabinet (100), and a back side, which is intended to face an interior of the cabinet (100); and
- a holder (130) at the back side of the front panel (109), which is configured to hold a handheld electronic device (140) such that a display of the electronic device (140) is facing the back side of the front panel (109);
- wherein the front panel (109) is configured such that visual content (203) which is shown on the display of the electronic device (140) is visible to the user facing the front side of the front panel (109).

## Amended claims

### Amended claims in accordance with Rule 137(2) EPC.

1. A cabinet (100), especially a kitchen cabinet, notably a kitchen cabinet of a fitted kitchen, configured to be attached to and/or to be placed against a wall of a room; wherein the cabinet (100) comprises
- a front panel (109) comprising a front side facing a user of the cabinet (100) and a back side facing an interior of the cabinet (100);
- a holder (130) at the back side of the front panel (109), which is configured to hold a handheld electronic device (140) such that a display of the electronic device (140) is facing the back side of the front panel (109); wherein the front panel (109) is configured such that visual content (203) which is shown on the display of the electronic device (140) is visible to the user facing the front side of the front panel (109);
- one or more speakers (103) at the front panel (109) of the cabinet (100); and
- a control unit (106) which is configured to
- receive an audio signal from the electronic device (105) placed within the holder (130) of the cabinet (100); and
- cause the audio signal to be rendered by the one or more speakers (103).

2. The cabinet (100) of claim 1, wherein
- the holder (130) for the electronic device (140) is located at a holder position at the back side of the front panel (109);
- the front panel (109) comprises a display section (120) at the holder position;
- the display of the electronic device (140) is located at a back side of the display section (120) of the front panel (109); and
- the display section (120) of the front panel (109) is at least partially transparent for visual content (203) which is shown on the display of the electronic device (140).

3. The cabinet (100) of claim 2, wherein
- the display section (120) of the front panel (109) is configured to occlude the display of the electronic device (140), when the display of the electronic device (140) is turned off; and/or
- the front side of the display section (120) of the front panel (109) has the same color and/or optical design as the remaining area of the front side of the front panel (109); and/or
- the display section (120) is such that the display section (120) blends into the remaining area of the front panel (109), when the display of the electronic device (140) is turned off.

4. The cabinet (100) of any previous claims, wherein the holder (130) comprises a rear panel (132) which is arranged in parallel to the back side of the front panel (109), in particular to the back side of a display section (120) of the front panel (109), to form a gap (131) between the front panel (109) and the rear panel (132) for taking up the electronic device (140).

5. The cabinet (100) of any previous claims, wherein
- the holder (130) comprises a gap (131) which extends in parallel to the back side of the front panel (109); and
- the gap (131) is such that the electronic device (140) can be inserted into the gap (131) to be held by the holder (130).

6. The cabinet (100) of any previous claims, wherein the front panel (109) of the cabinet (100) is a door of the cabinet (100) that can be opened to give access to the holder (130) at the back side of the front panel (109).

7. The cabinet (100) of any previous claims, wherein
- the cabinet (100) comprises a presence and/or proximity sensor (108) which is configured to detect the presence of the user in front of the front panel (109) of the cabinet (100); and
- the control unit (106) is configured to
- cause the display of the electronic device (140) to be activated, subject to detecting the presence of the user in front of the front panel (109) of the cabinet (100); and/or
- cause one or more user-specific messages to be shown on the display of the electronic device (140), subject to detecting the presence of the user in front of the front panel (109) of the cabinet (100).

8. The cabinet (100) of claim 7, wherein the control unit (106) is configured to cause the display of the electronic device (140) to be turned off, subject to detecting the absence of a user in front of the front panel (109) of the cabinet (100).

9. The cabinet (100) of any previous claims, wherein
- the cabinet (100) comprises one or more input elements (104, 105) configured to capture input data regarding a user input for the electronic device (140) placed within the holder (130); and
- the control unit (106) is configured to cause the electronic device (140) to be controlled in dependence of the input data.

10. The cabinet (100) of claim 9, wherein the control unit (106) is configured to
- detect that an electronic device (140) has been placed within the holder (130) of the cabinet (100); and
- in reaction to this automatically establish a communication link with the electronic device (140) for allowing the electronic device (140) to be controlled based on the input data from the one or more input elements (104, 105) of the cabinet (100).

11. The cabinet (100) of any of claims 9 to 10, wherein
- the cabinet (100) comprises a gesture sensor (105) as an input element (104, 105), notably at the front panel (109) of the cabinet (100), configured to sense gesture data regarding a gesture performed by the user of the cabinet (100) as input data; and
- the control unit (106) is configured to cause the electronic device (140) to be controlled based on the gesture data.

12. The cabinet (100) of any of claims 9 to 11, wherein
- the cabinet (100) comprises one or more microphones (104) as an input element (104, 105), notably at the front panel (109) of the cabinet (100), configured to capture acoustic data regarding a voice control command of the user of the cabinet (100) as input data; and
- the control unit (106) is configured to cause the electronic device (140) to be controlled based on the acoustic data.

13. The cabinet (100) of any previous claims, wherein the cabinet (100), notably the holder (130), comprises a charging element (121), notably a charging coil, configured to charge the electronic device (140) which is placed within the holder (130) of the cabinet (100).

14. An integration component, which is adapted to be integrated into a conventional cabinet (100), preferably a kitchen cabinet, notably a kitchen cabinet of a fitted kitchen, such that upon integration of the integration component into the cabinet (100) a cabinet (100) according to any of the previous claims results, wherein the integration component comprises at least
- a front panel (109) comprising a front side, which is intended to face a user of the cabinet (100), and a back side, which is intended to face an interior of the cabinet (100);
- a holder (130) at the back side of the front panel (109), which is configured to hold a handheld electronic device (140) such that a display of the electronic device (140) is facing the back side of the front panel (109); wherein the front panel (109) is configured such that visual content (203) which is shown on the display of the electronic device (140) is visible to the user facing the front side of the front panel (109)
- one or more speakers (103) at the front panel (109); and
- a control unit (106) which is configured to
- receive an audio signal from the electronic device (105) placed within the holder (130) of the cabinet (100); and
- cause the audio signal to be rendered by the one or more speakers (103).
